# EUROPÄISCHE PATENTANMELDUNG

(11) **EP 0 871 191 A1**
(43) Veröffentlichungstag der Anmeldung: **14.10.1998**
(21) Anmeldenummer: 98104895.2
(22) Anmeldetag: 18.03.1998
(51) Int. Cl.: H01H 31/00, H02B 13/075

(54) **Kurzschliesseinrichtung und damit versehenes Schaltfeld**

(30) Priorität: 10.04.1997 DE 19714770
(71) Anmelder: AEG Sachsenwerk GmbH, D-93055 Regensburg (DE)
(72) Erfinder: Stegmüller, Karl, Dipl.-Ing., 93109 Wiesent (DE); Reichl, Erwin, Dipl.-Ing., 93105 Tegernheim (DE)
(74) Vertreter: Dreiss, Fuhlendorf, Steimle & Becker, Patentanwälte

(57) **Zusammenfassung**

Bei einer Kurzschließeinrichtung (10) für ein gekapseltes, gasdicht abgeschlossenes Mittelspannungsschaltfeld, mit wenigstens einer Schaltkammer (10.1), von der ein Kontaktteil an einen spannungsführenden Phasenleiter angeschlossen ist, ist die Kurzschließeinrichtung (10) außerhalb des Schaltfeldes (1, 2, 3) angeordnet und über einen elektrischen Verbindungsleiter (11) mit dem spannungsführenden elektrischen Phasenleiter des Schaltfeldes (1) verbunden. Eine derartige Kurzschließeinrichtung besitzt eine sehr kurze Einschaltzeit und kann nach einem Kurzschlußereignis in einfacher Weise ausgetauscht werden.

## Beschreibung

Die Erfindung betrifft eine Kurzschließeinrichtung gemäß dem Oberbegriff des ersten Anspruchs und auf ein damit versehenes Schaltfeld.

Eine bekannte Kurzschließeinrichtung dieser Art (DE 34 12 250 A1) ist in einem Gehäuse eines einen Trennschalter aufnehmenden elektrischen Schaltgerätes vorgesehen, in dem ein geerdetes Schaltmesser eines Erdungsschalters schwenkbar gelagert ist, dessen Gegenkontakt an einem spannungsführenden Phasenleiter vorgesehen ist. Der die Schalter aufnehmende Innenraum des Gehäuses ist mit einem Löschgas als elektrisches Isoliermedium gefüllt. Von Nachteil ist bei dieser Anordnung, dass bei einer Nutzung des Erdungsschalters im spannungsführenden Zustand des Phasenleiters in Folge der dann auftretenden hohen Kurzschlußströme und/oder nach mehrmaligem Gebrauch insbesondere am Erdungsschalter irreparable Schäden auftreten. Zur Behebung dieser Schäden muss das gasdicht geschlossene Schaltgerätegehäuse geöffnet und der Erdungsschalter insgesamt ausgetauscht werden. Die Stromversorgung über dieses Schaltgerät ist somit für einen beachtlichen Zeitraum unterbrochen, abgesehen von dem erheblichen Aufwand für die Demontage und den Wiedereinbau sowie die Herstellung der Gasisolation. Außerdem ist zum Betätigen deratiger Erdungsschalter eine hohe Antriebsenergie erforderlich, wobei in Folge der zu beschleunigenden hohen Masse dennoch vom Auslösen des Einschaltvorganges bis zur elektrischen Kontaktgabe des Erdungsschalters eine Zeit von bis zu mehreren hunter Millisekunden verstreicht. Diese vergleichsweise lange Zeit hat bei einem Störlichtbogen innerhalb des Schaltgerätegehäuses besonders bei Mittelspannungsschaltanlagen auf Grund der im Lichtbogen umgesetzten enormen Wäremeenergie hohe Schäden zur Folge.

Der Erfindung liegt die Aufgabe zugrunde, eine Kurzschließeinrichtung, die eine sehr kurze Einschaltzeit besitzt und nach einem Kurzschlußereignis in einfacher Weise ausgetauscht werden kann, und ein damit versehenes Schaltfeld zu schaffen.

Die Lösung dieser Aufgabe erfolgt gemäß der Erfindung durch die Merkmale des ersten Anspruchs bzw. durch die des Anspruchs 23.

Bei einer Ausgestaltung einer Kurzschließeinrichtung gemäß der Erfindung braucht nach einem energiereichen, durch den oder mehrere Erdungsschalter herbeigeführten Kurzschluß im Bedarfsfall lediglich der Verbindungsleiter zum jeweiligen Erdungsschalter abgetrennt zu werden, wozu der Verbindungsleiter insbesondere als eleketrisch isoliertes Kabel ausgebildet sein kann. Dieses Kabel kann zumindest an dem dem elektrischen Gerät zugewandten Ende, vorzugsweise aber auch an dem dem Erdungsschalter zugewanden Ende mit einem Steckkontaktteil versehen sein, dem insbeosndere am Schaltgerätegehäuse und gegebenenfalls auch am Erdungsschalter ein angepasstes Gerätesteckteil zugeordnet ist. Das Gerätesteckteil im Gehäuse des Schaltgeräts ist dann mit dem jeweiligen Phasenleiter verbunden, der im Störungsfall kurzgeschlossen werden soll. Nach einem energiereichen Kurzschlußfall braucht somit lediglich die elektrische Verbindung durch Abstecken des Kabels aufgetrennt zu werden, so dass dann der Erdungsschalter ohne Eingriff in das gekapselte Schaltgerät, insbesondere ein gasdicht verschlossenes Mittelspannungsschaltfeld, ausgetauscht werden kann.

Der Erdungsschalter ist insbesondere in einem separaten Kurzschließergehäuse angeordnet, in dessen Wandungsteil das betreffende Gerätesteckteil sitzt. Innerhalb des Kurzschließergehäuses kann dann ein Isoliergas wie SF6, Stickstoff o.dgl. zur Anwendung gelangen, das auf Grund seiner hohen Isolationsfähigkeit bzw. seines hohen Druckes einen räumlich kleinen Aufbau dieser Kurzschließeinrichtung zulässt. Vorzugsweise sind in einem Kurzschließergehäuse mehrere und insbesondere drei Schaltkammern angeordnet, die sich in einer gemeinsamen Gasisolation befinden können oder für die in diesem Kurzschließergehäuse jeweils eigene Kammern ausgebildet sind. Bei einer Ausbildung des Kurzschließergehäuses aus elektrisch leitendem Material ist dasselbe über einen eigenen Verbindungsleiter an Erdpotential angeschaltet. Die erdpotentialseitigen Kontaktteile der Schaltkammern können dabei elektrisch mit dem geerdeten Kurzschließergehäuse verbunden sein. Werden in einem 3-phasigen Netz nur zwei Schaltkammern angewendet, dann werden deren einen Kontaktteile je an einen Phasenleiter und ihre anderen Kontaktteile gemeinsam an den dritten Phasenleiter angeschlossen. Während im ersteren Fall außer einem Kurzschluß der Phasenleiter auch deren Erdung durchgeführt wird, wenn die Schaltkammern geschlossen werden, erfolgt im zweiten Fall lediglich ein Kurzschluß der Phasenleiter untereinander.

Insbesondere wird als Schaltkammer jeweils eine Vakuumschaltkammer verwendet, die bei geringer zu betätigender Masse nur eine sehr kurze Schaltkontaktstrecke aufweist. Bei Anfwendung vergleichbarer Antriebseinrichtungen wird somit gegenüber Schaltmesseranordnungen eine wesentlich verkürzte Einschaltzeit erreicht, wodurch die Auswirkungen des Störlichtbogens auf ein Minimum reduziert werden können. Die Vakuumschaltkammer kann dabei in einfacher Weise aus einem ortsfest angeordneten Schaltkontaktteil und einem demgegenüber in axialer Richtung beweglich gehaltenen weiteren Schaltkontaktteil bestehen, das mit der entsprechenden mechanischen Antriebseinrichtung gekuppelt ist. Die Antriebseinrichtung kann dabei eine unmittelbar mit dem beweglichen Schaltkontaktteil in Anlage stehende, mechanisch vorgespannte Kontaktkraftfeder aufweisen, wobei der bewegliche Kontakt bei geöffneten Schaltkontaktteilen in seiner Ausgangslage verriegelt ist. Konzentrisch innerhalb der Kontaktkraftfeder kann dabei ein Haltestift vorgesehen sein, der mit dem beweglichen Kontaktteil fest verbunden und mit der Verriegelungseinrichtung lösbar in Eingriff steht. Bei einer Auslösung der Verriegelung braucht somit kein Kraftübertragungsgestänge bewegt zu werden und die achsengleich mit dem beweglichen Kontakt angeordnete Kontaktkraftfeder beschleunigt dann den beweglichen Kontakt kippfrei in seiner Achsrichtung. Um eine Verminderung der zu bewegenden Massen zu erzielen, kann der Kontaktbolzen des beweglichen Schaltkontaktteils eine koaxial angeordnete, nach außen offene Hülse bilden, in welche die Kontaktkraftfeder einendig eintaucht. Es ergibt sich dadurch auch ein entsprechend verkürzter Aufbau. Zur Halterung der Vakuumschaltkammer kann dabei ihr feststehendes Schaltkontaktstück starr mit dem Anschlußkontaktstück des Gerätesteckteils verbunden sein, das im Kurzschließergehäuse festsitzt. Hierdurch wird die getrennte Bauweise unterstützt und ein ohnehin notwendiges Bauteil als Halter für die Vakuumschaltkammer genutzt. Auf der gegenüberliegenden Seite kann die Schaltkammer an einer im Kurzschließergehäuse festgesetzten Brückenwand gehalten werden, welche zugleich als Gegenlager für die Kontaktkraftfeder dienen kann, sofern dieselbe nicht durch ihre Länge eine parallel dazu angeordnete Abstützwand erfordert. Die Brückenwand wie die Abstützwand können dabei mehreren Schaltkammern gemeinsam sein.

Die Hülse des beweglichen Schaltkontaktteils weist quer zur Achsrichtung vorzugsweise einen größeren Querschnitt, als das daran sitzende Schaltkontaktstück auf, um eine Kontaktkraftfeder mit entsprechend großem Durchmesser verwenden zu können. Dann ist es aber auch möglich, die Kontaktkraftfeder aus zwei konzentrisch ineinanderlaufenden Einzeldruckfedern aufzubauen, um die für eine schnelle und zuverlässige Betätigung in der Regel erforderlichen Druckkräfte von 200 bis 400 Kilopond bereitstellen zu können. Die eigentlichen Kontaktstücke können dabei einfache ungeschlitzte Vollkupferteile sein, die einen sehr geringen Kontaktübergangswiderstand aufweisen und mit geringem technischem Aufwand herstellbar sind. Ferner braucht die Vakuumschaltkammer keine Schirmelektroden aufzuweisen und kann im Übrigen insgesamt mit einfachen Abschlußelementen ausgebildet werden, da die Nutzung für Kurzschlußbelastung in der Regel nur einmal möglich ist. Der Einsatz einer Vakuumschaltkammer mit für einen Leistungsschalter üblicher Kontaktgeometrie stellt eine ständige Löschbereitschaft sicher und ist auch für mehrere Einschaltungen geeignet.

Um die Funktionsfähigkeit einer derart aufgebauten Kurzschließeinrichtung überprüfen zu können, ohne die Kontakte der Vakuumschaltkammer aufeinander schlagen zu lassen, kann der Verriegelungseinrichtung eine wahlweise aktivierbare Prüfvorrichtung zugeordnet werden, die nach Lösen der Verriegelung den beweglichen Kontaktteil nach einem Bruchteil seines Schalthubes arretiert. Das kann bspw. durch einen Stützschieber geschehen, der im Bedarfsfall den Haltestift nach einem Bruchteil seiner maximalen Verstellstrecke arretiert.

Weitere vorteilhafte Ausgestaltungen der Erfindung ergeben sich aus den Merkmalen eines oder mehrerer der weiteren Unteransprüchen.

Die Erfindung ist nachfolgend anhand eines dargestellten Auführungsbeispiels näher erläutert. Es zeigen:
- Figur 1: ein Schaltbild einer Schaltanlage mit separater, Vakuumschalter aufweisender Kurzschließeinrichtung;
- Figur 2: eine Kurzschließeinrichtung an einer schematisch dargestellten gasiolierten Schaltanlage;
- Figur 3: eine Kurzschließeinrichtung an einer schematisch dargestellten luftisolierten Schaltanlage;
- Figur 4: eine Kurzschließeinrichtung mit drei Schaltkammern im Längsschnitt;
- Figur 5: eine Stirnansicht der Kurschließeinrichtung und
- Figur 6: in vergrößerter längsgeschnittener Darstellung einen Teil der Antriebseinrichtung des Vakuumschalters nach Figur 4.

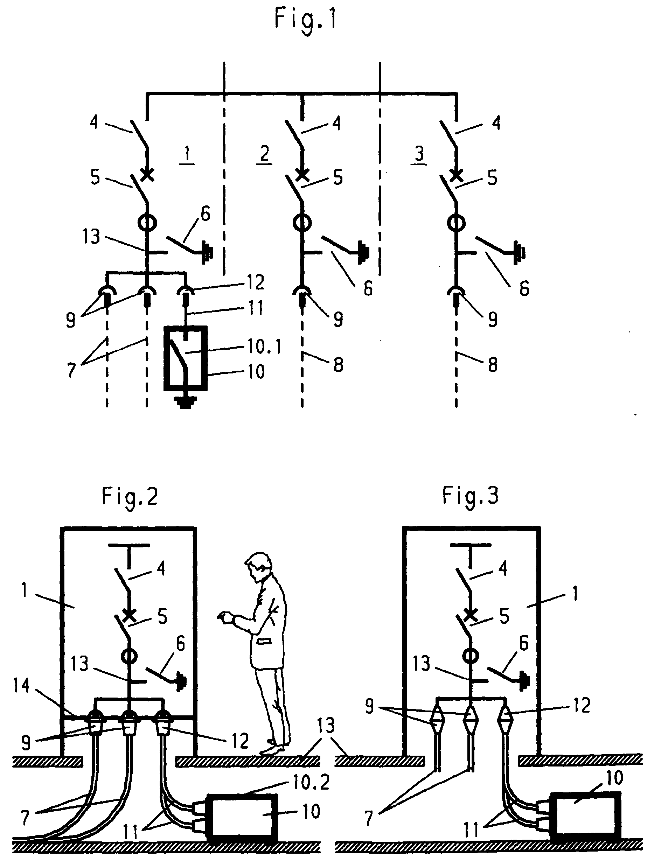

Eine gemäß Figur 1 z.B. als Teil einer größeren Schaltanlage aufgebaute Mittelspannungsschaltanlage weist ein Einspeisefeld 1 und Abgangsfelder 2, 3 auf, die jeweils Trennschalter 4 und Leistungsschalter 5 sowie Erdungsschalter 6 aufnehmen. Die Erdungsschalter 6 dienen dazu, eine spannungsfrei geschaltete Leitungsstrecke an Erdpotential zu legen, damit daran manuelle Arbeiten ausgeführt werden können. Die Einspeisung von elektrischer Energie erfolgt jeweils über ein Einspeisekabel 7, die wie die Kabel 8 der Abgangsfelder 2 und 3 über Geräteanschlußteile jeweils mit den Schaltern 5, 6 verbunden werden können.

Um einen Störlichtbogen in einem der Schaltfelder 1, 2, 3 schnell und wirksam löschen zu können, ist vorliegend nur dem Einspeisefeld 1 eine separate Kurzschließeinrichtung 10 zugeordnet, die über ein Kabel 11 und zugeordnete, mit den Geräteanschlußteilen 9 parallel geschaltete Geräteanschlußteile 12 in elektrisch leitender Verbindung mit dem oder den Phasenleitern 13 steht. Die Kurzschließeinrichtung 10 wird von einer nicht dargestellten, schnell reagierenden Sensoreinrichtung gesteuert, die zumindest das Schaltfeld 1, vorzugsweise jedoch auch die Schaltfelder 2 und 3 auf Störlichtbogenereignisse überwacht. Beim Auftreten eines Störlichtbogens in diesem Bereich werden nicht die Erdungsschalter 6 geschlossen, weil dieselben eine zu lange Einschaltzeit aufweisen würden. Vielmehr wird die Löschung des Lichtbogens allein durch die Kurzschließeinrichtung 10 vorgenommen, welche den oder die Phasenleiter gegen Erdpotential bzw. untereinander kurzschließt.

Ein Schaltfeld 1 mit Gasisolation ist in Figur 2 und ein Schaltfeld 1 mit Luftisolation in Figur 3 schematisch dargstellt. In beiden Fällen sind z.B. bei einem frei brennenden Kurzschluß der spannungsführenden Phasenleiter 13 nicht die innerhalb des Gehäuses des jeweiligen Schaltfeldes 1 liegenden Erdungsschalter 6 belastet, so dass daran auch keine Schäden entstehen können. Die Kurzschließeinrichtung 10 liegt vielmehr über die steckbaren Kabelverbindungen 11 mit dem oder den Phasenleitern 13 verbunden räumlich getrennt, z.B. unterhalb eines Zwischenbodens 13, auf dem die Schaltfelder 1, 2, 3 stehen und unter welchem auch die Kabel 7, 8 verlaufen. Im Falle des gasdicht abgeschlossenen Schaltfeldes 1 nach Fiugr 2 liegen die Geärteanschlußstücke 9, 12 geasdicht in einer Wand 14 des betreffenden Gehäuses.

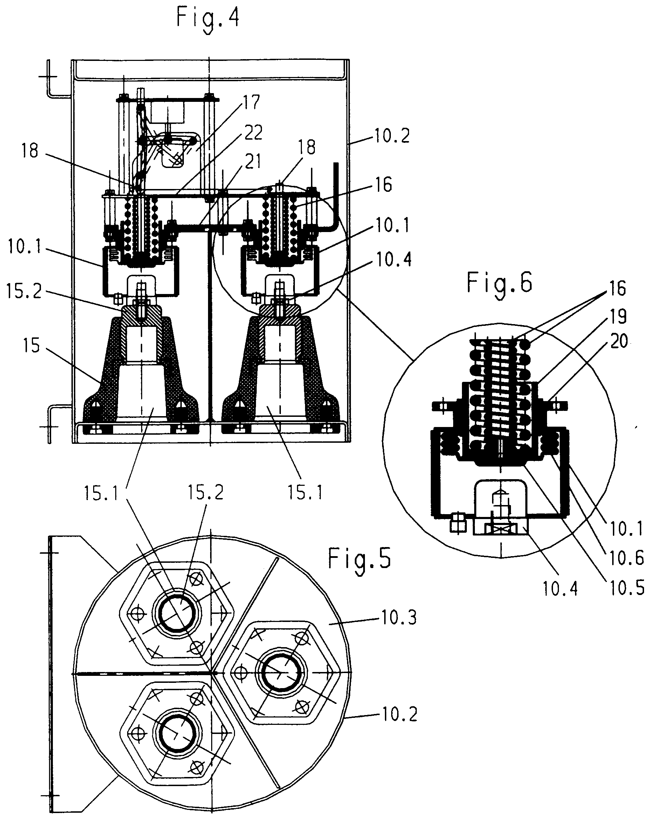

Die Kurzschließeinrichtung 10 umfasst je Phasenleiter 13 eine eigene Schaltkammer 10.1, die in einem Kurzschließergehäuse 10.2 angeordnet ist. Bei metallischer Ausbildung des Kurzschließergehäuses 10.2 ist dasselbe geerdet. Dabei sind gemäß den Figuren 4 und 5 in jedem Kurzschließergehäuse 10.2 für ein dreiphasiges Mittelspannungsnetz auch drei Schaltkammern 10.1 vorgesehen. Das Kurzschließergehäuse 10.2 ist dabei insbesondere gasdicht abgeschlossen und mit einem Isoliergas wie bspw. SF6 oder Stickstoff o.dgl. gefüllt. Den einzelnen Schaltkammern 10.1 ist dabei je eine Innenkonussteckbuchse 15 als Geräteanschlußteil zugeordnet, wobei für ein dreiphasiges Netz auch drei Innenkonussteckbuchsen sternfömrig in einer kreisförmigen Stirnwand 10.3 des Kurzschließergehäuses 10.2 gasdicht sitzen. Dabei sind Ihre Konusstecköffnungen 15.1 nach außen offen, während ihr feststehendes Anschlußkontaktstück 15.2 im Innern des Kurzschließergehäuses 10.2 mit dem feststehenden Schaltkontaktstück 10.4 der Schaltkammer 10.1 starr verbunden ist.

Die Schaltkammern 10.1 ist als Vakuumschaltkammer ausgebildet, die einen Aufbau des Erdungsschalters mit sehr kurzer Schaltstrecke und minimaler zu bewegender Masse des beweglichen Schaltkontaktstücks 10.5 ermöglicht. Das bewegliche Schaltkontaktstück 10.5 kann über einen Faltenbalg 10.6 oder einen mit konzentrischen Wellen versehenen Deckel vakuumdicht mit dem zugehörigen isolierenden Gehäuse 10.1 verbunden sein, wobei die beiden Schaltkontaktstücke 10.4 und 10.5 sich in axialer Bewegungsrichtung des beweglichen Schaltkontaktstücks 10.5 gegenüberstehen. Der bewegliche Schaltkontaktteil 10.5 steht unmittelbar mit einer achsengleich angeordneten, mechanisch vorgespannten Kontaktkraftfederanordnung 16 in Anlage, wobei die Kontaktkraftfederanordnung aus zwei konzentrisch ineinander angeordneten, achsengleich mit dem beweglichen Kontaktstück 10.6 verlaufenden Druckfedern besteht. Die Kontaktkraftfederanordnung 16 bildet dabei zugleich die Einschaltfeder für das Schließen der im normalen Betriebszustand offengehaltenen Schaltkontakte 10.4, 10.5. Vorzugsweise konzentrisch innerhalb der Kontaktkraftfeder 16 weist der bewegliche Schaltkontakt 10.5 einen Haltestift 18 auf, der mit einer lösbaren Verriegelungseinrichtung 17 in Eingriff steht, welche bei geöffneter Kontaktstrecke und gespannter Kontaktkraftfeder 16 in Verriegelungsstellung steht. Um die Masse des beweglichen Schaltkontaktstücks 10.5 weiter zu minimieren, ist sein der Stromleitung nach außen dienender Kontaktbolzen als koaxial angordnete, nach außen offene Hülse 19 ausgebildet, in die zugleich die Kontaktkraftfederanordnung 16 eintaucht. Dadurch wird zusätzlich die Bauhöhe der Anordnung vermindert. Die Hülse 19 ist in einer z.B. gleichzeitig der Stromübertragung dienenden Führungsmanschette 20 axial verschieblich gehalten. Die Führungsmanschette 20 ist an einer Brückenwand 21 festgesetzt, welche im Kurzschließergehäuse 10.2 parallel zur äußeren Stirnwand 10.3 angeordnet ist. Parallel zur und mit Abstand von der Brückenwand 21 liegt eine ortsfeste Abstützwand 22, an welcher sich die Kontaktkraftfederanordnung 16 abstützt. Der Haltestift 18 durchgreift diese Abstützwand 22 und steht mit dem frei hindurchragenden Ende mit der Verriegelungsrichtung 17 in Wirkungseingriff. Die Abstützwand 22 trägt dabei die Verriegelungseinrichtung 17. Die Brückenwand 21, die Abstützwand 22 und die Verriegelungseinrichtung 17 können dabei allen im Kurzschließergehäuse 10.2 angeordneten Schaltkammern 10.1 gemeinsam sein. Zudem ist die Hülse 19 des beweglichen Kontaktstücks 10.5 quer zur Achsrichtung mit einem größeren Querschnitt ausgebildet als das daran sitzende Schaltkontaktstück 10.5, um eine Kontaktkraftfederanordnung 16 unterbringen zu können, welche eine axiale Druckkraft von mehreren hundert Kilopond aufbringt. Dabei sind die Schaltkontaktstücke 10.4 und 10.5 als ungeschlitzte Vollkupferscheiben ausgebildet, die im Kurzschlußfall einen sehr geringen Kontaktübergangswiderstand aufweisen und die, solange sie nicht verschweißt sind, nur im stromlosen Zustand geöffnet werden.

Um eine Kurzschließeinrichtung dieser Art auf Funktionstüchtigkeit überprüfen zu können, ist die Verriegelungseinrichtung 17 mit einer wahlweise aktivierbaren Prüfvorrichtung ausgestattet, welche den beweglichen Kontaktteil 10.5 bzw. dessen Haltestift 18 nach einem Bruchteil seines Schalthubes arretiert. Dies kann ein einfaches mechanisches Sperrglied sein, das in den Verstellweg des Haltestiftes 18 gelegt wird und dessen Bewegung nach einer kurzen Verstellstrecke stoppt, nachdem die Verriegelungseinrichtung ausgelöst ist. Bei ausreichend geringem axialem Prüfweg kann diese Prüfung mit auch bei am Erdungsschalter 10.1 anliegender Betriebsspannung durchgeführt werden, ohne einen Kurzschluß herbeizuführen.

Der bewegliche Schaltkontakt 10.5 einer oder mehrerer der Schaltkammern 10.1 liegt entweder an Massenpotential wie das geerdete Kurzschließergehäuse 10.2, so dass im Falle eines gewünschten Kurzschlusses der betreffende Phasenleiter 13 an Erdpotential angeschlossen wird. Es ist jedoch auch möglich, nur die beweglichen Schaltkontaktstücke 10.5 untereinander zu verbinden, wenn ein mehrphasiges Netz vorhanden ist, so dass durch Schließen der Schaltkammern 10.1 ein Phasenkurzschluß herbeigeführt wird. In einem dreiphasigen Netz brauchen dabei lediglich zwei Schaltkammern 10.1 vorgesehen zu werden, deren zusammengeschaltete bewegliche Schaltkontakte an einen Phasenleiter angeschlossen werden, während die feststehenden Schaltkontaktstücke der beiden Schaltkammern 10.1 an die anderen Phasen gelegt sind.

Insgesamt ergibt sich bei einer erfindungsgmäßen Ausgestaltung eine extrem schnell schaltende Kurzschließeinrichtung, nachdem bei geringer zu bewegender Masse die Kontaktraftfedern zugleich die Antriebsfedern für die beweglichen Schaltkontaktstücke sind. Insbesondere ergibt sich durch die separate Anordnung der Kurzschließereinrichtung außerhalb des zu schützenden Schaltfeldes die Möglichkeit, diese Einrichtung in beliebiger Entfernung insbesondere vom Einspeiseschaltfeld anzuordnen und bei Anbringung von Steckverbindungen jederzeit austauschen zu können. Dabei ist es auch zweckmäßig, bei einem Störlichtbogenereignis im Gehäuse der Kurzschließeinrichtung eine Eigenauslösung der Verriegelungseinrichtung 17 vorzusehen. Hierbei kann eine direkte mechanische Auslösung über den ansteigenden Behälterinnendruck oder durch Detektion mittels eines Druck- oder Dichtesensors o.dgl. erfolgen. Ebenso kann die Versorgung bzw. Überwachung der Gasfüllung im Gehäuse der Kurzschließeinrichtung über ein Gasüberwachungssystem erfolgen, das auch das zugeordnete Schaltfeld überwacht. Zudem kann den einzelnen Schaltkammern eine Wägezelle zugeordnet sein, welche permanent die Schloßauflagekraft im Bereich der Verriegelungseinrichtung 17 überprüft und damit die Auslösebereitschaft signalisieren kann. Desgleichen kann der Auslösestromkreis ruhestromüberwacht gestaltet sein, um auch Fehler im Auslösekreis sofort erkennen zu können. Die Störlichtbogenzeit lässt sich hierdurch auf Werte weit unter 100 Millisekunden und insbesondere unter 20 Millisekunden verringern.

## Patentansprüche

1. Kurzschließeinrichtung (10) für ein Schaltfeld (1, 2, 3) vorzugsweise ein gekapseltes, insbesondere gasdicht abgeschlossenes Mittelspannungsschaltfeld, mit wenigstens einer Schaltkammer (10.1), von der ein Kontaktteil an einen spannungsführenden Phasenleiter angeschlossen ist, **dadurch gekennzeichnet,** dass die Kurzschließeinrichtung (10) außerhalb des Schaltfeldes (1, 2, 3) angeordnet und über einen elektrischen Verbindungsleiter (11) mit dem spannungsführenden elektrischen Phasenleiter des Schaltfeldes (1) verbunden ist.

2. Kurzschließeinrichtung nach Anspruch 1, dadurch gekennzeichnet, dass, ihre mindestens eine Schaltkammer (10.1) in einem separaten Kurzschließergehäuse (10.2) angeordnet ist, das von einem die Phasenleiter beinhaltenden Gehäuse des Schaltfeldes (1, 2, 3) räumlich getrennt vorgesehen ist.

3. Kurzschließeinrichtung nach Anspruch 1 oder 2, dadurch gekennzeichnet, dass in einem Kurzschließergehäuse (10.2) mehrere Schaltkammern (10.1) angeordnet sind, die über Kabelverbindungen (11) an unterschiedliche Phasenleiter (13) des Schaltfeldes (1) angeschlossen sind.

4. Kurzschließeinrichtung nach Anspruch 1 oder einem der folgenden, dadurch gekennzeichnet, dass das Kurzschließergehäuse (10.2) geerdet ist.

5. Kurzschließeinrichtung nach Anspruch 3 oder 4, dadurch gekennzeichnet, dass ein Schaltkontaktteil (10.5) einer Schaltkammer (10.1) mit den entsprechenden Schaltkontaktteilen (10.5) einer oder mehrerer Schaltkammern (10.1) verbunden ist und dass der andere Kontaktteil (10.4) der Schaltkammern (10.1) jeweils an einen unterschiedlichen Phasenleiter (13) angeschlossen ist.

6. Kurzschließeinrichtung nach Anspruch 4 oder 5, dadurch gekennzeichnet, dass die elektrisch miteinander verbundenen Kontaktteile (10.5) mit dem Kurzschließergehäuse (10.2) elektrisch verbunden sind.

7. Kurzschließeinrichtung nach Anspruch 1, dadurch gekennzeichnet, dass die Schaltkammer (10.1) eine Vakuumschaltkammer ist.

8. Kurzschließeinrichtung nach Anspruch 1 oder einem der folgenden, dadurch gekennzeichnet, dass der bewegliche Schaltkontaktteil (10.5) der Schaltkammer (10.1) unmittelbar mit einer achsengleich angeordneten, mechanisch vorgespannten Kontaktkraftfederanordnung (16) in kraftschlüssiger Anlage steht.

9. Kurzschließeinrichtung nach Anspruch 1 oder einem der folgenden, dadurch gekennzeichnet, dass konzentrisch innerhalb der Kontaktkraftfeder (16) ein Haltestift (18) angeordnet ist, der mit dem beweglichen Kontaktteil (10.5) fest verbunden und mit einer lösbaren Verriegelungseinrichtung (17) in Eingriff steht, die bei geöffneter Kontaktstrecke und gespannter Kontaktkraftfeder (16) in Verriegelungsstellung steht.

10. Kurzschließeinrichtung nach Anspruch 8 oder 9, dadurch gekennzeichnet, dass der bewegliche Schaltkontaktteil (10.5) eine koaxial angeordnete, nach außen offene Hülse (19) aufweist, in welche die Kontaktkraftfeder (16) einendig eintaucht.

11. Kurzschließeinrichtung nach Anspruch 1 oder einem der folgenden, dadurch gekennzeichnet, dass der feststehende Schaltkontaktteil (10.4) starr mit einem Anschlußkontaktstück (15.2) eines Geräteanschlußteils (15) verbunden ist, das in einer Wand (10.3) des Kurzschließergehäuses (10.2) festgesetzt ist.

12. Kurzschließeinrichtung nach Anspruch 1 oder einem der folgenden, dadurch gekennzeichnet, dass die Schaltkammer (10.1) an ihrem dem beweglichen Schaltkontaktteil (10.5) zugeordneten Ende an einer im Kurzschließergehäuse (10.2) festgesetzten Brückenwand (21) gehalten ist.

13. Kurzschließeinrichtung nach Anspruch 12, dadurch gekennzeichnet, dass mit Abstand parallel zur Brückenwand (21) eine ortsfeste Abstützwand (22) angeordnet ist, an der sich die Kontaktkraftfeder (16) abstützt und welche die Verriegelungseinrichtung (17) trägt.

14. Kurzschließeinrichtung nach Anspruch 1 oder einem der folgenden, dadurch gekennzeichnet, dass die Verriegelungseinrichtung eine wahlweise aktivierbare Prüfvorrichtung aufweist, welche den beweglichen Kontaktteil nach einem Bruchteil seines Schalthubes arretiert.

15. Kurzschließeinrichtung nach Anspruch 3 oder einem der folgenden, dadurch gekennzeichnet, dass mehrere Schaltkammern (10.1) eine gemeinsame Brückenwand (21), Abstützwand (22) und Verriegelungseinrichtung (17) aufweisen.

16. Kurzschließeinrichtung nach Anspruch 10 oder einem der folgenden, dadurch gekennzeichnet, dass die Hülse (19) des beweglichen Kontaktteils (10.5) quer zur Achsrichtung einen größeren Querschnitt aufweist, als das daran sitzende Schaltkontaktstück (10.5).

17. Kurzschließeinrichtung nach Anspruch 7 oder einem der folgenden, dadurch gekennzeichnet, dass die Schaltkontaktstücke (10.5) ungeschlitzte Vollkupferteile sind.

18. Kurzschließeinrichtung nach Anspruch 1 oder einem der folgenden, dadurch gekennzeichnet, dass der Verbindungsleiter (11) ein Mittelspannungskabel ist.

19. Kurzschließeinrichtung nach Anspruch 3, 4 oder 6 bis 18, dadurch gekennzeichnet, dass zwei Schaltkammern (10.1) vorgesehen sind, deren eine Kontaktteile je an einen Phasenleiter und deren andere Kontaktteile gemeinsam an einen dritten Phasenleiter angeschlossen sind.

20. Kurzschließeinrichtung nach Anspruch 13 oder einem der folgenden, gekennzeichnet durch eine Vorrichtung zur Eigenauslösung der Verriegelungseinrichtung (17) bei innerem Überdruck.

21. Kurzschließeinrichtung nach Anspruch 13 oder einem der folgenden, gekennzeichnet durch eine die Schloßauflagekraft im Bereich der Verriegelungseinrichtung (17) erfassende Wägezelle.

22. Kurzschließeinrichtung nach Anspruch 1 oder einem der folgenden, gekennzeichnet durch eine Gasüberwachungsvorrichtung.

23. Schaltfeld, vorzugsweise gekapseltes, insbesondere gasdicht abgeschlossenes Mittelspannungsschaltfeld, mit einer Kurzschließeinrichtung nach Anspruch 1 oder einem der folgenden.
